# EUROPÄISCHE PATENTANMELDUNG

(11) **EP 3 741 195 A1**
(43) Veröffentlichungstag der Anmeldung: **25.11.2020**
(21) Anmeldenummer: 20164233.7
(22) Anmeldetag: 19.03.2020
(51) Int. Cl.: A01B 23/02, C22C 29/06, C22C 29/08, B22F 3/24, B22F 5/00

(54) **HARTMETALLEINSATZ**

(30) Priorität: 23.05.2019 AT 504762019
(71) Anmelder: BOEHLERIT GmbH & Co.KG., 8605 Kapfenberg (AT)
(72) Erfinder: Traxler, Margarethe, 8053 Graz (AT); Weißenbacher, Ronald, 8600 Bruck an der Mur (AT)
(74) Vertreter: Wirnsberger & Lerchbaum Patentanwälte OG

(57) **Zusammenfassung**

Die Erfindung betrifft einen Hartmetallmetalleinsatz (1) für ein Bodenbearbeitungsgerät für die Landwirtschaft, welcher mit oder aus zumindest einen Hartstoff und zumindest einem Bindemetall gebildet ist. Erfindungsgemäß ist als Bindemetall Eisen vorgesehen.

## Beschreibung

Die Erfindung betrifft einen Hartmetalleinsatz für ein Bodenbearbeitungsgerät für die Landwirtschaft, welcher mit oder aus zumindest einem Hartstoff und zumindest einem Bindemetall gebildet ist.

Des Weiteren betrifft die Erfindung eine Verwendung eines solchen Hartmetalleinsatzes.

Im Stand der Technik sind Bodenbearbeitungsgeräte für die Landwirtschaft bekannt, welche aus Stahl gefertigt sind. In jüngerer Zeit wurde dazu übergegangen, entsprechende Teile aus Stahl mit Einsätzen aus Hartmetall zu bestücken, um damit die Gebrauchsdauer eines entsprechend genutzten Teiles zu verlängern. Hartmetalleinsätze erhöhen zwar zunächst auf den ersten Blick die Gesamtkosten, allerdings hat sich gezeigt, dass durch die Bestückung von Bodenbearbeitungsgeräten für die Landwirtschaft oder Komponenten hierfür mit Hartmetalleinsätzen eine Standzeit so weit erhöht werden kann, dass letztlich der am Anfang anfallende Kostenmehraufwand mehr als kompensiert werden kann.

Hartmetalleinsätze für Bodenbearbeitungsgeräte und/oder auch Komponenten oder Einzelteile für solche Geräte, die wiederum an einer landwirtschaftlichen Maschine oder Vorrichtung befestigt werden, können theoretisch grundsätzlich analog zusammengesetzt sein wie Hartmetalleinsätze für spanabhebende Operationen in der Metallbearbeitung.

Für spanabhebende Operationen haben sich diverse Hartmetallsorten durchgesetzt, welche neben den verwendeten Hartstoffen, einem Bindemetall, einer durchschnittlichen Korngröße des oder der Hartstoffe, einem Verhältnis der Gewichtsanteile sowie gegebenenfalls auch einer Beschichtung diverse Parameter bzw. Variablen umfassen, welche auf den jeweiligen Einsatzzweck hin ausgerichtet werden.

Bei spanabhebenden Operationen haben sich insbesondere Hartmetalle bewährt, welche Cobalt als Bindemetall enthalten. Es wurden auch Versuche unternommen, Cobalt durch andere Bindemetalle teilweise zu ersetzen, insbesondere durch Nickel und/oder Eisen. Im Grundsatz ist allerdings Cobalt nach wie vor das zweckmäßigste Bindemetall für spanabhebend eingesetzte Hartmetalleinsätze.

Aufgabe der Erfindung ist es, einen Hartmetalleinsatz der eingangs genannten Art anzugeben, welcher sich bevorzugt zur Anwendung für Bodenbearbeitungsgeräte für die Landwirtschaft einschließlich Komponenten für solche Bodenbearbeitungsgeräte eignet.

Des Weiteren ist es eine Aufgabe der Erfindung, eine Verwendung eines Hartmetalleinsatzes anzugeben.

Die erfindungsgemäße Aufgabe wird gelöst, wenn bei einem Hartmetalleinsatz der eingangs genannten Art als Bindemetall Eisen vorgesehen ist.

Ein mit der Erfindung erzielter Vorteil ist insbesondere darin zu sehen, dass erkannt wurde, dass es für landwirtschaftliche Anwendungen völlig ausreichend ist, ausschließlich oder zumindest anteilig überwiegend Eisen als Bindemetall vorzusehen. Bei einem erfindungsgemäßen Hartmetalleinsatz ist somit hauptsächlich oder ausschließlich Eisen als Bindemetall vorgesehen. Herstellungsbedingte Verunreinigungen von Cobalt, die sich bei der Gewinnung des erforderlichen Bindemetalls Eisen nicht vollständig beseitigen lassen, können im Rahmen der Erfindung jedoch vorhanden sein. Erfindungsgemäß beträgt dieser Anteil an Cobalt aber nicht mehr als 0,20 Gewichtsprozent (im Folgenden: Gew.-%), bevorzugt weniger als 0,10 Gew.-%, besonders bevorzugt weniger als 0,08 Gew.-%. Das Bindemetall liegt abgesehen von herstellungsbedingten Verunreinigungen an Cobalt somit cobaltfrei vor.

Im Rahmen der Erfindung wurde insbesondere erkannt, dass es für Anwendungen im Bereich der Landwirtschaft bereits ausreichend sein kann, ausschließlich Eisen als Bindemetall einzusetzen. Wenn ausschließlich Eisen als Bindemetall, abgesehen von wie erwähnt herstellungsbedingten Verunreinigungen, als Bindemetall eingesetzt wird, wird ein Hartmetall bzw. ein Hartmetalleinsatz erhalten, welcher im Vergleich mit Cobalt als Bindemetall weniger bruchfest ist. Im Bereich der Landwirtschaft kommt es hierauf allerdings nicht an. Somit kann das an sich in Bezug auf die Umwelt, aber auch eine Gesundheitsgefährdung bedenkliche Cobalt durch Eisen ersetzt werden.

Darüber hinaus bietet Eisen als Bindemetall den Vorteil, dass entsprechende Hartmetalleinsätze sehr gut anlötbar sind, beispielsweise auf Komponenten eines Bodenbearbeitungsgerätes. Dies erleichtert nicht nur eine Herstellung von Komponenten bzw. Bodenbearbeitungsgeräten mit derartigen Hartmetalleinsätzen, sondern erlaubt es auch Landwirten vor Ort, Reparaturmaßnahmen relativ einfach vorzunehmen und so bei einem Verscheiß einzelner Hartmetalleinsätze selbst aktiv werden zu können.

Ein weiterer Vorteil ist darin zu sehen, dass ein Abrieb der Hartmetalleinsätze bei Verwendung in einem Bodenbearbeitungsgerät ökologisch unbedenklich ist. Dies trifft für Cobalt nicht zu.

Der Hartstoff ist bevorzugt ein Carbid eines Metalls ausgewählt aus der Gruppe bestehend aus Wolfram, Titan, Vanadium, Chrom, Niob und/oder Molybdän. Bevorzugt ist das Carbid ein Wolframcarbid. Dabei kann in dieser bevorzugten Variante auch vorgesehen sein, dass ein Teil des Wolramcarbids durch Titancarbid, gegebenenfalls auch ein anderes Carbid eines der genannten Metalle, ersetzt ist. Der Hartstoff bzw. das Carbid ist dabei bevorzugt in einem Anteil von 75 Gew.-% bis 95 Gew.-%, vorzugsweise 78 Gew.-% bis 94 Gew.-%, insbesondere 80 Gew.-% bis 93 Gew.-%, im Hartmetall vorgesehen. Je höher ein Anteil an Hartstoff ist, umso härter und verschleißfester ist der Hartmetalleinsatz. Auf der anderen Seite bedingen höhere Festigkeitswerte eine niedrigere Zähigkeit. Insofern ist ein ausgewogener Ausgleich für die intendierte Anwendung zu finden. Hierfür hat es sich als geeignet erwiesen, wenn ein Anteil an Bindemetall 6 Gew.-% bis 25 Gew.-%, bevorzugt 8 Gew.-% bis 22 Gew.-%, insbesondere 10 Gew.-% bis 20 Gew.-%, beträgt. Dies ermöglicht einen optimalen Ausgleich zwischen einer erforderlichen Verschleißbeständigkeit einerseits und einem umweltschonenden Hartmetalleinsatz andererseits. Höhere Gehalte an Eisen führen zwar dazu, dass der Hartmetalleinsatz zu Ausbrüchen neigen kann, was allerdings im landwirtschaftlichen Bereich ganz anders als in der spanabhebenden Bearbeitung von metallischen Werkstücken, beispielsweise Kurbelwellen, keine entscheidende Rolle spielt. Während es bei einer landwirtschaftlichen Bearbeitung im Grundsatz auf eine relativ grobe Strukturierung und/oder ein Schneiden von Erdreich ankommt, ist bei einer spanabhebenden Operation von metallischen Werkstücken wie Kurbelwellen höchste Präzision erforderlich. Dies ist aber eben in der landwirtschaftlichen Bearbeitung nicht erforderlich, weshalb höhere Gehalte an Eisen eingesetzt werden können. Darüber hinaus ist Eisen deutlich umweltfreundlicher als Cobalt und kommt ohnedies bereits in merklich höheren Anteil in dem zu bearbeitenden Erdreich vor.

Wenngleich es ausreichend ist, Eisen als alleiniges Bindemetall vorzusehen, können neben Eisen auch Nickel und/oder Chrom als Bestandteile des Bindemetalls vorliegen. Eisen bleibt aber die anteilsmäßige größte Komponente an Bindemetall. Ein Gesamtanteil an Nickel und Chrom beträgt maximal 4 Gew.-%. Durch eine Beimengung von mehr als 0,15 Gew.-% bis zu insgesamt maximal 4 Gew.-% an Nickel und/oder Chrom kann eine Korrosionsbeständigkeit erhöht werden, was von Vorteil für die Maximierung der Standzeit ist.

Wenngleich nicht zwingend, kann am Hartmetalleinsatz teilweise oder vollflächig eine Beschichtung vorgesehen sein. Die Beschichtung kann insbesondere durch chemical vapour deposition (CVD) und/oder physical vapour deposition abgeschieden sein. Bei der Beschichtung kann es sich beispielsweise um eine Beschichtung des Typs AITiN handeln. Auch andere Beschichtungen wie beispielsweise mit oder aus AICrN sind möglich. Möglich sind auch alternierende Beschichtungssysteme, welche aus mehreren Lagen aufgebaut sind. Die Lagen können abwechselnd angeordnet sein, beispielsweise Lagen aus AITiN und AICrN, die alternierend, beispielsweise mit einer Dicke von jeweils bis zu 1 µm, abwechselnd angeordnet sind. Möglich ist es auch, dass bloß eine einzige Beschichtungslage vorgesehen ist, welche gegebenenfalls mit einer Deckschicht abgeschlossen sein kann. Beispielsweise kann die Deckschicht aus Al₂O₃ bestehen. Die darunter angeordnete Schicht kann beispielsweise aus AICrN bestehen. Unabhängig vom jeweiligen Beschichtungssystem ist bevorzugt vorgesehen, dass eine Dicke bzw. Stärke der Beschichtung insgesamt bis zu 15 µm, bevorzugt 2 µm bis 12 µm, insbesondere 3 µm bis 8 µm, beträgt.

Entsprechend den vorstehend dargestellten Vorteilen wird ein erfindungsgemäßer Hartmetalleinsatz bevorzugt für ein Bodenbearbeitungsgerät für die Landwirtschaft, insbesondere zur aufbereitenden Bearbeitung von landwirtschaftlichen Flächen, eingesetzt. Bodenbearbeitungsgerät für die Landwirtschaft ist in diesem Zusammenhang breit zu verstehen. Dies bedeutet, dass es sich hierbei um eine Maschine bzw. Vorrichtung handeln kann, welche bereits als solche für einen landwirtschaftlichen Einsatz brauchbar ist. Es kann sich dabei allerdings auch um eine Komponente handelt, die beispielsweise als austauschbares Teil an einer größeren Vorrichtung wie einem Pflug oder dergleichen befestigt ist.

Entsprechend den vorstehend dargelegten Vorteilen besteht die Lösung der weiteren Aufgabe darin, dass ein erfindungsgemäßer Hartmetalleinsatz für ein Bodenbearbeitungsgerät für die Landwirtschaft verwendet wird. Wiederum kann das Bodenbearbeitungsgerät eine Vorrichtung im Gesamten als solche sein, beispielsweise ein Pflug, kann aber auch eine Komponente sein, die auf einer landwirtschaftlichen Maschine befestigt wird, beispielsweise eine Hackschar.

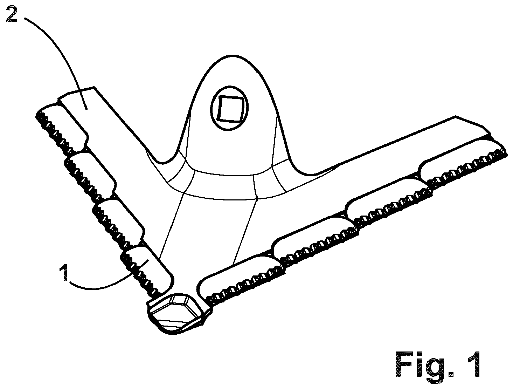

Weitere Merkmale, Vorteile und Wirkungen der Erfindung ergeben sich aus dem nachfolgend dargestellten Ausführungsbeispiel. Fig. 1 hierzu zeigt eine Hackschar.

In Fig. 1 ist eine Hackschar 2 dargestellt. Die Hackschar 2 weist mehrere Hartmetalleinsätze 1 auf. Jeder dieser Hartmetalleinsätze 1 ist aus einem Hartstoff, nämlich Wolframcarbid, sowie einem Bindemetall aufgebaut. Der Anteil des Wolframcarbids beträgt beispielsweise 85 Gew.-%. Der Anteil des Bindemetalls beträgt beispielsweise 10 Gew.-% oder 15 Gew.-%. Das Bindemetall ist Eisen. Eine durchschnittliche Korngröße des Wolframcarbids, das gegebenenfalls teilweise durch Titancarbid ersetzt sein kann, beträgt beispielsweise 4,5 µm bis 5,6 µm. Es können aber auch feinere Hartmetallsorten eingesetzt werden. Bei einem Bindemetallanteil von Eisen als ausschließliches Bindemetall und einer durchschnittlichen Korngröße des Wolframcarbids beträgt die Härte (HV30) rund 1550 bis 1650 und die Dichte rund 14,25 gcm⁻³.

Im Einsatz hat sich gezeigt, dass bei einer Hackschar 2 wie in Fig. 1 dargestellt erfindungsgemäße Hartmetalleinsätze 1 mit Eisen als Bindemetall annähernd analoge Standzeiten wie solche mit Cobalt erbringen. Im Vergleich ist jedoch festzuhalten, dass ein Abrieb des Hartmetalleinsatzes 1 und damit auch des Bindemetalls wesentlich unbedenklicher ist, da Eisen ohne Weiteres im Erdreich aufgenommen werden kann, wohingegen Cobalt im Erdreich als Kontamination wirkt und insbesondere auch in die Nahrungskette gelangen kann. Wenngleich selbst bei hohen Gehalten an Eisen und einer damit einhergehenden Zähigkeit Ausbrüche nicht vermieden werden können, spielt dies für die Bodenbearbeitung keine signifikante Rolle, anders als in der hochpräzisen Bearbeitung von metallischen Werkstücken. Insofern ergibt sich mit dem Einsatz von Eisen als Bindemetall für Hartmetalleinsätze 1 für Bodenbearbeitungsgeräte für die Landwirtschaft ein optimierter Anwendungsbereich von Hartmetallen, welche ausschließlich oder zumindest überwiegend mit Eisen als Bindemetall und cobaltfrei gebildet werden.

## Patentansprüche

1. Hartmetalleinsatz (1) für ein Bodenbearbeitungsgerät für die Landwirtschaft, welcher mit oder aus zumindest einem Hartstoff und zumindest einem Bindemetall gebildet ist, **dadurch gekennzeichnet, dass** als Bindemetall Eisen vorgesehen ist.

2. Hartmetalleinsatz (1) nach Anspruch 1, **dadurch gekennzeichnet, dass** der Hartstoff ein Carbid eines Metalls ausgewählt ist aus der Gruppe bestehend aus Wolfram, Titan, Vanadium, Chrom, Niob und/oder Molybdän.

3. Hartmetalleinsatz (1) nach Anspruch 1 oder 2, **dadurch gekennzeichnet, dass** der Hartstoff aus Wolframcarbid und optional Titancarbid gebildet ist.

4. Hartmetalleinsatz (1) nach einem der Ansprüche 1 bis 3, **dadurch gekennzeichnet, dass** der Hartstoff in einem Anteil von 75 Gew.-% bis 95 Gew.-%, vorzugsweise 78 Gew.-% bis 94 Gew.-%, insbesondere 80 Gew.-% bis 93 Gew.-%, im Hartmetall vorliegt.

5. Hartmetalleinsatz (1) nach einem der Ansprüche 1 bis 4, **dadurch gekennzeichnet, dass** der Anteil an Bindemetall 6 Gew.-% bis 25 Gew.-%, bevorzugt 8 Gew.-% bis 22 Gew.-%, insbesondere 10 Gew.-% bis 20 Gew.-%, beträgt.

6. Hartmetalleinsatz (1) nach einem der Ansprüche 1 bis 5, **dadurch gekennzeichnet, dass** am Hartmetalleinsatz (1) eine Beschichtung vorgesehen ist.

7. Hartmetalleinsatz (1) nach einem der Ansprüche 1 bis 6, **dadurch gekennzeichnet, dass** der Hartstoff eine durchschnittliche Korngröße von 0,5 µm bis 10 µm, bevorzugt 0,6 µm bis 8 µm, insbesondere 0,7 µm bis 1,5 µm, aufweist.

8. Hartmetalleinsatz (1) nach einem der Ansprüche 1 bis 7, **dadurch gekennzeichnet, dass** neben Eisen als Nickel und/oder Chrom als Bestandteile des Bindemetalls vorliegen.

9. Hartmetalleinsatz (1) nach Anspruch 8, **dadurch gekennzeichnet, dass** Nickel und/oder Chrom einzeln oder gemeinsam vorliegen, wobei ein Gesamtanteil an Nickel und Chrom maximal 4 Gew.-% beträgt.

10. Bodenbearbeitungsgerät für die Landwirtschaft, insbesondere zur aufbereitenden Bearbeitung von landwirtschaftlichen Flächen, aufweisend einen Hartmetalleinsatz (1) nach einem der Ansprüche 1 bis 9.

11. Verwendung eines Hartmetalleinsatzes (1) nach einem der Ansprüche 1 bis 9 für ein Bodenbearbeitungsgerät für die Landwirtschaft.
